# EUROPEAN PATENT SPECIFICATION

(11) **EP 2 028 839 B1**
(45) Date of publication and mention of the grant of the patent: **17.10.2012**
(21) Application number: 08153380.4
(22) Date of filing: 27.03.2008
(51) Int. Cl.: H04N 5/232, G06F 3/048

(54) **Method of providing menu using touchscreen and multimedia apparatus applying the same**
Verfahren zur Menübereitstellung mittels Berührungsbildschirm und Multimediavorrichtung damit
Procédé pour la fourniture d'un écran tactile utilisant des menus et appareil multimédia l'appliquant

(30) Priority: 21.08.2007 KR 20070084132
(43) Date of publication of application: 25.02.2009
(73) Proprietor: Samsung Electronics Co., Ltd., Suwon-si, Gyeonggi-do, 443-742 (KR)
(72) Inventor: Jang, In-ra, Gyeonggi-do (KR); Seung, Jung-ah, Gyeonggi-do (KR)
(74) Representative: Grünecker, Kinkeldey, Stockmair & Schwanhäusser

(56) References cited:
- EP-A- 1 577 876
- JP-A- 2006 303 714
- US-A1- 2001 017 615
- US-A1- 2003 160 878
- US-A1- 2003 202 015
- US-A1- 2006 045 514
- US-A1- 2006 072 028
- US-A1- 2007 024 736
- US-B1- 6 646 633
- US-B1- 6 952 229

## Description

### BACKGROUND OF THE INVENTION

### 1. Field of the Invention

The present general inventive concept relates to a method of providing a menu and a multimedia apparatus applying the same, and more particularly, to a method of providing a menu allowing a user to select an item using a touchscreen and a multimedia apparatus applying the same.

### 2. Description of the Related Art

A user interface (UI) has provided increased ergonomic user operation, and along with this a touchscreen technology has been developed. A touchscreen enables a user to input commands by touching a screen of a display device. Because of convenience, touchscreens are now widely used as a user interface.

Many multimedia apparatuses such as camcorders have adopted the touchscreen technology. These multimedia apparatuses feature neat appearance as it is unnecessary to form separate operation buttons on the main body.

However, a graphic user interface (GUI) button is required to be indicated in order for a user to make a touch input. Because the GUI button always has to be indicated even when it is unnecessary to operate the touchscreen, inconvenience occurs.

Furthermore, the size of a touchscreen is rather limited so it hinders the miniaturization of a portable multimedia device. For example, if a GUI button to manipulate a touchscreen is on screen, it means a space to display other menus, such as the ones that user wants, is reduced.

It will be efficient if a touchscreen removes unnecessary windows and instead displays a menu that a user wants as large as possible, in order to provide convenience to a user of selecting menus with fingertips. The user will make less mistakes if a larger menu is displayed.

It is also necessary to resolve the problem that a user's inadvertent touch on a touchscreen can cause a menu to be undesirably selected.

Every user wants to avoid making errors in manipulating a touch screen, and also wants a larger menu. Accordingly, a touchscreen is required, which shows menus in a more efficient manner.

US 6,952,229 is directed to a digital camera having input devices and a display capable of displaying a plurality of set information items.

US 2003/0202015 is directed to an imaging device user interface method and apparatus. Control elements (icons) in a front plane are superimposed over a background image in a two-dimensional grid. To facilitate viewing the background image, the icons are nominally translucent.

US 2003/0160878 is directed to a digital camera and image editing system. A touch panel is disposed on a liquid crystal monitor. By depressing a title portion displayed on the liquid crystal monitor by means of a touch pen, a corresponding signal is sent to a CPU. Functions of the camera are selectable by the touch panel in different modes as long as the liquid crystal monitor is used.

US 2001/0017615 is directed to a touch-type universal remote control. The touch-type screen can be activated to display a main menu page by operating a basic button set. When a touch-type item is pressed, the menu corresponding to the pressed item is entered.

US 2006/0072028 is directed to controlling a digital camera through a touch screen. Display of icons showing a status and enabling user selections by icon manipulation on the touch screen is activated by a separate, distinct menu button. After global activation of icon display a user touch of an icon in turn displays all alternative selections for the menu item as collection of icons and permits user selection by touching a desired icon to execute a corresponding setting change.

JP 2006303714 is directed to a menu control for a digital camera. Configuration starts from display of current settings for each menu item as icons in fixed vertical positions at the left screen edge. For a menu change the user selects one item by a touch pad adjacent to the icon column. After selection of an item, icons for alternative settings of the item are displayed horizontally. The user can move horizontally to a desired icon with a rotation part and select a new setting by release of the touch pad. The selected new icon then is displayed in the same screen location as the old icon.

### SUMMARY OF THE INVENTION

The invention provides a multimedia device according to claim 1 and a method according to claim 6. The present general inventive concept provides a method of providing a menu, allowing a user to activate a touchscreen and menu screen, and a multimedia device applying the same.

The present general inventive concept also provides a method of providing a menu for continuously indicating icons representing selected menu items and a multimedia device applying the same.

Additional aspects and utilities of the present general inventive concept will be set forth in part in the description which follows and, in part, will be obvious from the description, or may be learned by practice of the present general inventive concept.

The foregoing and/or other aspects and utilities of the present general inventive concept may be achieved by providing a multimedia device, which includes a touch screen to receive a user touch, a manipulating unit to receive a user manipulation, and a control unit to control so that the touchscreen is activated and a menu that is selectable by the user's touch is indicated in the touchscreen, when the user manipulation is input through the manipulating unit while the touchscreen is in inactivated state.

The manipulating unit may include a button.

The control unit controls so that the menu that is selectable by the user touch is not displayed in the touchscreen when the touchscren is in an inactivated state.

The menu may include items and icons to represent the functions of the items.

When an item is selected from the menu through the touchscreen, the control unit controls so that an icon of the selected item remains being displayed in the touch screen even after the menu disappears.

The icon of the selected item is displayed in the same spot irrespective of whether the icon is displayed along with the menu or displayed without the menu.

The foregoing and/or other aspects and utilities of the present general inventive concept may also be achieved by providing a method of providing a menu, which may include receiving a user touch, and controlling so that a touchscreen is activated and a menu that is selectable by the user touch is indicated in the touchscreen, when a user manipulation is input while the touchscreen is in inactivated state.

The receiving may include receiving the user manipulation through a button.

The method may further include controlling so that the menu that is selectable by the user touch is not displayed in the touchscreen when the touchscren is in inactivated state.

The menu may include items and icons to represent the functions of the items.

When an item is selected from the menu through the touchscreen, the method may further include controlling so that an icon of the selected item remains being displayed in the touchscreen even after the menu disappears.

The icon of the selected item is displayed in the same spot irrespective of whether the icon is displayed along with the menu or displayed without the menu.

The foregoing and/or other aspects and utilities of the present general inventive concept may be achieved by providing a multimedia device which may include a display unit to display a menu comprising items and icons to represent the items, an input unit to select one from among the items of the menu being displayed in the display unit, and a control unit to control so that when an item is selected from the menu through the input unit, an icon of the selected item remains being displayed in the display unit even after the menu disappears.

The icon of the selected item is displayed in the same spot irrespective of whether the icon is displayed along with the menu or displayed without the menu.

The multimedia device may further include a manipulating unit to receive a user manipulation, and wherein the display unit and the input unit are implemented as a touchscreen, and wherein the control unit controls so that the touchscreen is activated and a menu that is selectable through a user touch is displayed on the touchscreen, when the user manipulation is input through the manipulating unit while the touchscreen is in inactivated state.

The manipulating unit may include a button.

The foregoing and/or other aspects and utilities of the present general inventive concept may also be achieved by providing a method of providing a menu which may include displaying a menu comprising items and icons to represent the items, selecting one from among the items of the menu being displayed, and controlling so that when an item is selected from the menu through the input unit, an icon of the selected item remains being displayed even after the menu disappears.

The icon of the selected item may be displayed in the same spot irrespective of whether the icon is displayed along with the menu or displayed without the menu.

The selecting may include selecting one from among items of the displayed menu through a touchscreen which receives a user touch, and controlling so that the touchscreen is activated and a menu that is selectable through a user touch is displayed on the touchscreen, when the user manipulation is input through the manipulating unit while the touchscreen is in inactivated state.

The manipulating unit may include a button.

The foregoing and/or other aspects and utilities of the present general inventive concept may also be achieved by providing a multimedia device, including a touchscreen to receive a user's touch to select a menu among plural menus, and a manipulating unit to activate the touchscreen such that the menus that are selectable by a user's touch are indicated on the touchscreen while the touchscreen is in an inactivated state.

The menus each comprise items and icons to represent functions of the items

When an item is selected from one of the menus through the touchscreen, an icon of the selected item remains being displayed at the touchscreen even after the menu is removed from the touchscreen.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a block diagram of a camcorder according to an example embodiment of the present general inventive concept;

FIG. 2 is a flowchart illustrating a method of providing a menu, which allows a user to manipulate to activate a touchscreen and to display a menu according to an example embodiment of the present general inventive concept;

FIG. 3 illustrates a touchscreen module of a camcorder according to an example embodiment of the present general inventive concept;

FIG. 4 illustrates a screen that appears in response to a pressing on a menu button according to an example embodiment of the present general inventive concept; and

FIG. 5 illustrates the process of displaying an icon that represents a menu item upon selecting according to an example embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

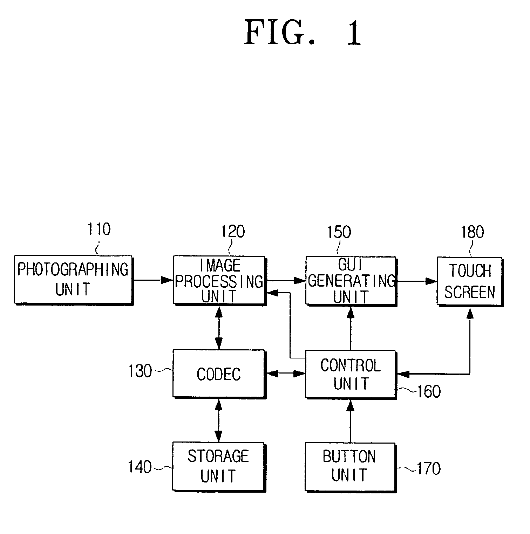

FIG. 1 is a block diagram of a camcorder according to an example embodiment of the present general inventive concept. Referring to FIG. 1, a camcorder includes a photographing unit 110, an image processing unit 120, a CODEC 130, a storage unit 140, a GUI generating unit 150, a controlling unit 160, a button unit 170, and a touchscreen 180.

The photographing unit 110 photoconverts an optical signal into an electric signal, and processes the electric signal. The photographing unit 110 may include a lens unit, a charge coupled device (CCD), a correlated double sampler / auto gain controller / analog-to-digital converter (CDS/AGC/ADC), a CCD driving unit, and a lens driving unit (not illustrated).

The image processing unit 120 processes an image input from the photographing unit 110, and outputs a resultant signal to the GUI generating unit 150 to display the image. The image processing unit 120 also outputs the processed image signal to the CODEC 130 to store the image.

The image processing unit 120 performs operations for format conversion of an image signal and adjustment of an image scale, such as digital zoom, auto white balance (AWB), auto focus (AF), or auto exposure (AE).

The CODEC 130 encodes an image signal received from the image processing unit 120. The CODEC 130 then sends the encoded image signal to the storage unit 140.

The CODEC 130 also decodes the encoded image signal stored in the storage unit 140 when, for example, the image signal is intended to be processed or transmitted to another location. The CODEC 130 then sends out the decoded image signal to the image processing unit 120.

The storage unit 140 stores a compressed form of an image that is photographed through the photographing unit 110. The storage unit 140 may be implemented as a flash memory, or a hard disc.

The GUI generating unit 150 generates a GUI to be displayed on the touchscreen 180, and adds the generated GUI to the image being output from the image processing unit 120.

The touchscreen 180 displays the image which includes the added GUI being output from the GUI generating unit 150. The touchscreen 180 also receives a user touch and transmits it to the control unit 160.

The button unit 170 receives a user's button operation and transmits it to the control unit 160. The button unit 170 includes a menu button to indicate a menu that is selectable through the touchscreen.

The control unit 160 controls the overall operation of the camcorder. More specifically, the control unit 160 controls the image processing unit 120 to process the signals of the photographed image. The control unit 160 also controls the CODEC 130 to encode or decode the image signal. The control unit 160 also controls the GUI generating unit 150 to generate a GUI and adds it to the image.

The control unit 160 receives a user manipulation of input commands through the button unit 170 and controls the camcorder to operate according to the input commands. The control unit 160 also receives a user's touch, which is an input provided through the touchscreen 180, and controls so that a menu is selected according to the touch input.

If a user keeps pressing a menu button of the button unit 170 with the touchscreen 180 in the inactivated state, the control unit 160 controls so that the touchscreen 180 is activated and a menu that is selectable by a user's touch is displayed on the touchscreen 180. The control unit 160 also controls the GUI generating unit 150 to generate a GUI that corresponds to the menu.

The displayed menu includes a plurality of function items and icons representing these function items. For example, a focus menu may include an auto focus or manual focus item, each being indicated by corresponding icons.

When the touchscreen 180 is in the inactivated state, the touchscreen 180 displays an image but will not receive a touch input. When the touchscreen 180 is in an activated state, the touchscreen 180 displays an image and also can receive a touch input.

When the touchscreen 180 is in the inactivated state, the control unit 160 controls so that a menu is not displayed on the touchscreen 180 if it is not selectable by the user touch. Because it is impossible to select menus by touch when the touchscreen 180 is in the inactivated state, these menus are unnecessary at this stage. As a result, the touchscreen 180 can be more efficiently used.

When a menu item is selected from the touchscreen 180, the control unit 160 controls such that an icon representing the selected menu item remains being displayed on the touchscreen 180. The control unit 160 controls so that the icon of the selected item can be placed on the same spot of the display irrespective of whether the menu is displayed or not.

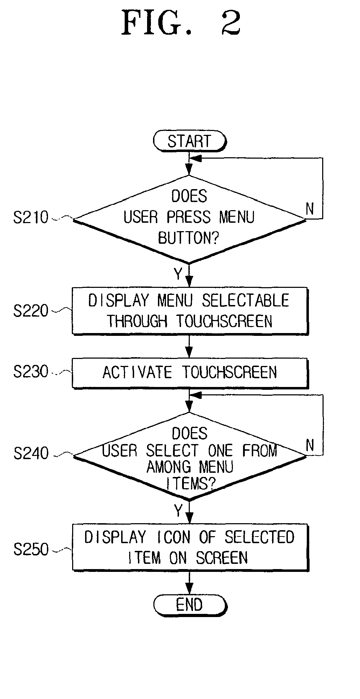

The operation of the control unit 160 will be explained in detail below with reference to FIG. 2, which is a flowchart illustrating a method of providing a menu, which allows a user to manipulate to activate a touchscreen and to display a menu, according to an example embodiment of the present general inventive concept.

At operation S21 0, the control unit 160 determines whether a user has pressed a menu button of the button unit 170. If a user presses a menu button when the touchscreen 180 is in the inactivated state at operation S210-Y, the control unit 160 controls so that a menu that is selectable through the touchscreen 180 is displayed at operation S220. At operation S230, the control unit 160 controls the touchscreen 180 to be switched from the inactivated state to the activated state.

More specifically, the control unit 160 controls the GUI generating unit 150 to generate a menu that is selectable through the touchscreen 180 as a GUI. The control unit 160 controls the GUI generating unit 150 so that the generated GUI is added to an image signal being output from the image processing unit 120. The control unit 160 then controls the GUI generating unit 150 to output an image signal added with the GUI to the touchscreen 180.

As a result, menus are displayed on the touchscreen 180, to activate the touchscreen 180, and to thus allow a user to select the menus by touching the touchscreen 180.

At operation S240, the control unit 160 determines whether the user selects one of the menu items on the touchscreen 180. If the user selects a certain menu item at operation S240-Y, the control unit 160 at operation S250 controls so that an icon that represents the selected item remains being displayed on the touchscreen 180.

More specifically, if a user selects a certain menu item through the touchscreen 180, the control unit 160 controls so that a selected menu item is displayed along with an icon. The control unit 160 also controls so that the icon of the selected menu item remains being displayed even when the menu disappears according to a user manipulation.

The control unit 160 may particularly control so that the icon of the selected menu item can be displayed in the same spot irrespective of whether the icon is displayed along with the menu item.

As a result, the touchscreen 180 is activated according to a user manipulation and displays menus.

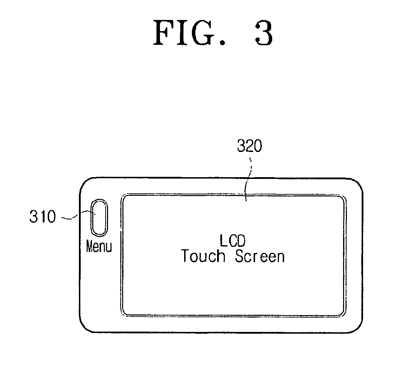

Referring now to FIGS. 3 to 5, the structure of a menu displayed on the touchscreen 180 and the process of selecting a menu will be explained in greater detail below. FIG. 3 illustrates a touchscreen module of a camcorder according to an example embodiment of the present general inventive concept.

Referring to FIG. 3, the touchscreen module of the camcorder may include a menu button 310, and a liquid crystal display (LCD) touchscreen 320.

The LCD touchscreen 320 may be in the inactivated state by default, which does not receive user's touch input.

The LCD touchscreen 320 may display a menu that is selectable through a touch input, in response to a user's pressing on the menu button 310, and thus the LCD touchscreen 320 is activated.

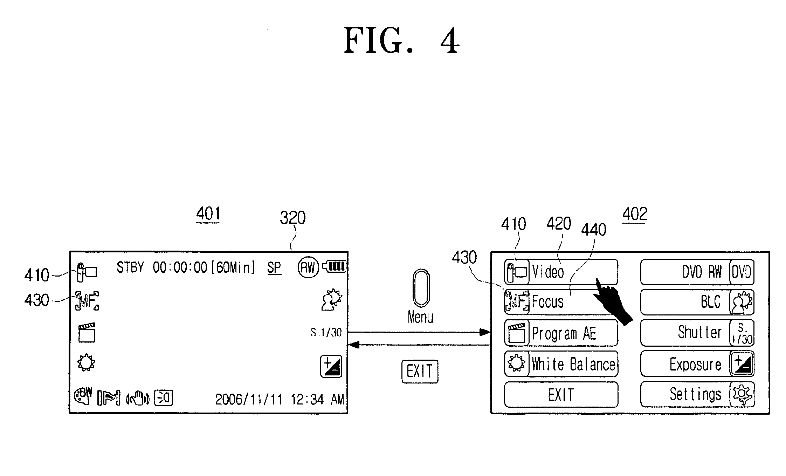

The structure of the menu screen will be explained in greater detail below with reference to FIG. 4. FIG. 4 illustrates a screen displayed when a menu button is pressed according to an example embodiment of the present general inventive concept.

FIG. 4 illustrates a first screen 401 of the LCD touchscreen 320 in a photography standby mode. The first screen 401 illustrates information regarding the state of the camcorder or recording time information on a top portion, and also illustrates dates or time information on the bottom portion. The first screen 401 illustrates icons of the left side menus on the left portion, and illustrates icons of the right side menus on the right portion.

FIG. 4 also illustrates a second screen 402 that displays the menus selectable with a touch input. The menus include left side menus and right side menus. The left side menus may include Video, Focus, Program AE, White Balance, or EXIT, and the right side menus may include DVD RW, BLC, Shutter, Exposure or Settings.

The second screen 402 displays icons and a title of the menus. For example, a Video menu 420 displays Video as the title of the menu 420, along with a video icon 410 having a pictorial representation of a camcorder to indicate the menu 420.

When the menu button 310 (see FIG. 3) is pressed in the first screen 401, the screen 401 switches to the second screen 402. When an EXIT menu is selected from the second screen 402, the second screen 402 switches to the first screen 401.

Icons corresponding to the left side menus are displayed in the left portion, and icons corresponding to the right side menus are displayed at the right portion of the first screen 401. The icons are always displayed at the same spots in the first and second screens 401 and 402.

For example, the Video icon 410 that corresponds to the Video menu 420 at the top of the left side menus of the second screen is placed at an uppermost part of the left portion of the first screen 401. A Focus icon 430 of the Focus menu 440 which is the second menu from the top of the left side menus in the second screen 402 is placed in the second place from the top of the left side menus in the first screen 401.

Because a menu is displayed upon pressing the menu button 310, arrangement of the screen is efficient when the touchscreen 180 is in the inactivated state.

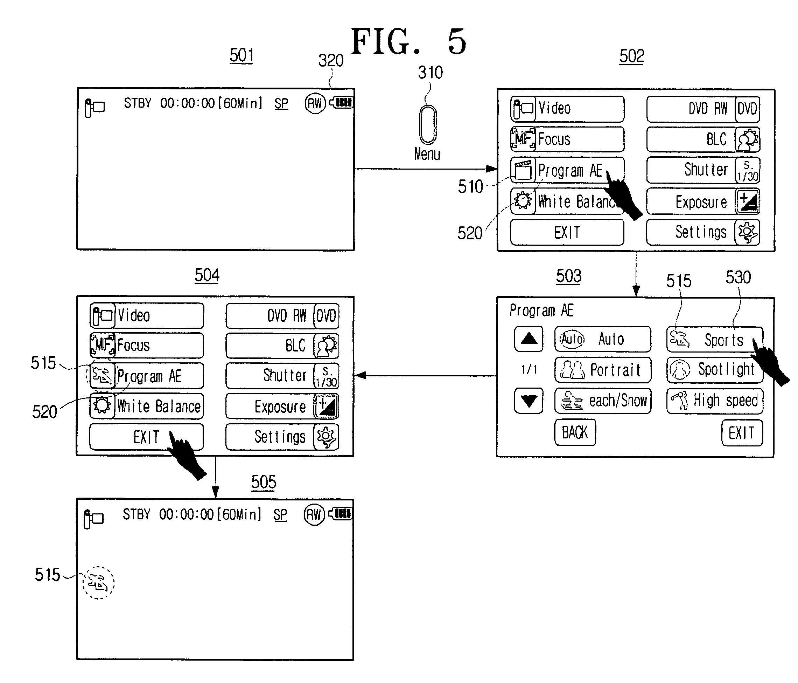

The process of selecting menu items will be explained below with reference to FIG. 5, which illustrates the process of displaying an icon that represents a menu item upon selecting according to an example embodiment of the present general inventive concept.

FIG. 5 illustrates a first screen 501 of the LCD touchscreen 320 in a photography standby mode. A Video icon is illustrated in the left top portion of the screen, indicating the current state to be a Video mode. In the example illustrated in FIG. 5, no other icons of other functions are displayed.

When the menu button 310 is pressed while the first screen 501 is being displayed in the LCD touchscreen 320, menus that are selectable through the touchscreen 320 are displayed in the LCD touchscreen 320, as in a second screen 320 of FIG. 5.

Referring to FIG. 5, the second screen 502 illustrates titles and icons of the menus that are selectable through the touchscreen. For example, a title 520 and an icon 510 of a Program automatic exposure (AE) menu are displayed in the third place from the top of the left side menus.

In response to a user's selecting of the Program AE menu 520 with a touch input, detailed items are displayed as illustrated at a third screen 503.

The third screen 503 displays items related to the Program AE menu 520. Each item is displayed along with an icon that represents the function of the item. For example, a Sports icon 515, pictorially representing a runner, is included in a Sports item 530 at the top of the right side menus.

When a user selects the Sports item 530 with a touch input, the LCD touchscreen 320 illustrates the menus again as illustrated in a fourth screen 504. But this time, the Sports icon 515 of the Sports item 530 is displayed in the icon display area of the Program AE menu 520.

When a user selects an EXIT menu with a touch input, the menu screen disappears, and returns to a photography standby screen, which is a fifth screen 505. However, the fifth screen 505 still illustrates the Sports icon 515 of the Sports item 530 displayed in the screen. As illustrated, the Sports icon 515 is placed in the same spot regardless of whether the icon 515 is in the fifth screen 505 or in the fourth screen 504 in which the menus are displayed.

Herein, the concept that the Sports icon 515 is placed in the same spot in the fourth and fifths screens 504 and 505 means that the icon 515 is in the same location, and this location may be expressed by coordinates or a relative location such as the third place from the top of the left portion of the screen.

As a result, the user is enabled to know what is being selected with convenience.

While the touchscreen 180 is activated by the button unit 170 in the example embodiments explained above, other alternatives, such as a wheel or a jog shuttle, may well be employed to receive a user manipulation.

While a camcorder is implemented as a multimedia device in the example embodiments explained above, one will also understand that other types of multimedia device that incorporate touchscreen technology can also be employed. For example, digital camera, portable multimedia player (PMP), or MP3 player may be employed.

As explained above, a method of providing a menu and a multimedia device incorporating the method according to the example embodiments of the present general inventive concept allows a user to activate a touchscreen and display a menu with simple manipulation. As a result, efficient use of touchscreen menu is achieved.

Furthermore, because the touchscreen is activated by the user's manipulation of buttons before a menu is displayed, unintended use of the touchscreen due to a user's inadvertent touch can be prevented.

Furthermore, a larger menu screen is provided, because it is unnecessary to keep displaying GUI buttons on the touchscreen to display the menus.

Furthermore, because an icon selected by the user remains being displayed in the same spot even after the menu disappears, the user knows what is being selected with convenience. Accordingly, correlation increases between a user's menu selection and an icon displayed in the screen.

Although a few embodiments of the present general inventive concept have been illustrated and described, it will be appreciated by those skilled in the art that changes may be made in these embodiments without departing from the principles of the general inventive concept, the scope of which is defined in the appended claims and their equivalents.

## Claims

1. A multimedia device comprising:
a touchscreen (180, 320) to receive a user touch;
a manipulating unit (170) to receive a user manipulation; and
a control unit (160) to control so that the touchscreen is activated from a first screen (401, 505) to a second screen (402, 502, 504) and a menu that is selectable by a user's touch is indicated on the touchscreen, when the user manipulation is input through the manipulating unit while the touchscreen is in an inactivated state, wherein the first screen illustrates icons (410, 430) only and the second screen displays icons (410, 430) along with titles (420, 440) of selectable menus; and when an item is selected from the menu displayed in a third screen (503) after selecting a menu title through the touchscreen, the control unit controls so that an icon (515) representing the selected item (530) remains being displayed in the touchscreen even after the menu disappears according to a user manipulation,
wherein the icon of the selected item is displayed in the same spot in the first and second screens irrespective of whether the icon is displayed along with the menu title or displayed without the menu.

2. The multimedia device of claim 1, wherein the manipulating unit comprises a button (310).

3. The multimedia device of claim 1, wherein the control unit controls so that the menu that is selectable by the user touch is not displayed on the touchscreen when the touchscreen is in the inactivated state.

4. The multimedia device of claim 1, wherein the menu comprises items and icons to represent functions of the items.

5. A method of providing a menu in a multimedia device, the method comprising:
receiving a user touch by a touch screen (180, 320);
controlling so that the touchscreen is activated from a first screen (401, 505) to a second screen (402, 502, 504) and a menu that is selectable by the user touch is indicated on the touchscreen, when a user manipulation is input by a manipulating unit (170) while the touchscreen is in an inactivated state;
wherein the first screen illustrates icons (410, 430) only and the second screen displays icons (410, 430) along with titles (420, 440) of selectable menus; and when an item is selected from the menu displayed in a third screen (503) after selecting a menu title through the touchscreen
controlling so that an icon (515) representing the selected item (530) remains being displayed in the touchscreen even after the menu disappears according to a user manipulation, wherein
the icon of the selected item is displayed in the same spot in the first and second screens irrespective of whether the icon is displayed along with the menu title or displayed without the menu.

6. The method of claim 5, wherein the receiving comprises receiving the user manipulation through a button.

7. The method of claim 5, further comprising:
controlling so that the menu that is selectable by the user touch is not displayed in the touchscreen when the touchscren is in the inactivated state.

8. The method of claim 5, wherein the menu comprises items and icons to represent the functions of the items.

## Patentansprüche

1. Eine Multi-Media Vorrichtung, die umfasst:
einen Berührungsbildschirm (180, 320) zum Aufnehmen einer Benutzerberührung;
eine Bedienungseinheit (170) zum Aufnehmen einer Benutzerbedienung; und
eine Steuerungseinheit (160) zum Steuern so dass der Berührungsbildschirm von einer ersten Bildschirmansicht (401, 505) zu einer zweiten Bildschirmansicht (402, 502, 504) aktiviert wird und ein Menü, das durch eine Berührung eines Benutzers wählbar ist, auf dem Berührungsbildschirm abgebildet wird, wenn die Benutzerbedienung durch die Bedienungseinheit eingegeben wird während der Berührungsbildschirm in einem nicht-aktivem Zustand ist, wobei die erste Bildschirmansicht nur Symbole (410, 430) zeigt und die zweite Bildschirmansicht Symbole (410, 430) zusammen mit Titeln (420, 440) von wählbaren Menüs anzeigt; und wenn ein Eintrag aus dem Menü, das nach Auswählen eines Menütitels in einer dritten Bildschirmansicht (503) angezeigt wird, durch den Berührungsbildschirm gewählt wird, steuert die Steuerungseinheit so dass ein Symbol (515), das den gewählten Eintrag (530) darstellt, im Berührungsbildschirm angezeigt bleibt sogar nachdem das Menü gemäß einer Benutzerbedienung verschwindet, wobei das Symbol des gewählten Eintrags an der gleichen Stelle in der ersten und zweiten Bildschirmansicht angezeigt wird, ungeachtet dessen, ob das Symbol zusammen mit dem Menütitel angezeigt wird oder ohne das Menü angezeigt wird.

2. Die Multi-Media Vorrichtung nach Patentanspruch 1, wobei die Bedienungseinheit eine Schaltfläche (310) umfasst.

3. Die Multi-Media Vorrichtung nach Patentanspruch 1, wobei die Steuerungseinheit so steuert, dass das Menü, das durch die Benutzerberührung wählbar ist, nicht auf dem Berührungsbildschirm angezeigt wird, wenn der Berührungsbildschirm in dem nicht-aktivem Zustand ist.

4. Die Multi-Media Vorrichtung nach Patentanspruch 1, wobei das Menü Einträge und Symbole zum Darstellen von Funktionen der Einträge umfasst.

5. Ein Verfahren für ein Bereitstellen eines Menüs in einer Multi-Media Vorrichtung, wobei das Verfahren folgende Schritte umfasst:
Aufnehmen einer Benutzerberührung durch einen Berührungsbildschirm (180, 320);
Steuern so dass der Berührungsbildschirm von einer ersten Bildschirmansicht (401, 505) zu einer zweiten Bildschirmansicht (402, 502, 504) aktiviert wird und ein Menü, das durch die Benutzerberührung wählbar ist, auf dem Berührungsbildschirm abgebildet wird, wenn eine Benutzerbedienung durch eine Bedienungseinheit (170) eingegeben wird während der Berührungsbildschirm in einem nicht-aktivem Zustand ist; wobei die erste Bildschirmansicht nur Symbole (410, 430) zeigt und die zweite Bildschirmansicht Symbole (410, 430) zusammen mit Titeln (420, 440) von wählbaren Menüs anzeigt; und wenn ein Eintrag aus dem Menü, das nach Auswählen eines Menütitels durch den Berührungsbildschirm in einer dritten Bildschirmansicht (503) angezeigt wird, gewählt wird,
Steuern so dass ein Symbol (515), das den gewählten Eintrag (530) darstellt, in dem Berührungsbildschirm angezeigt bleibt sogar nachdem das Menü gemäß einer Benutzerbedienung verschwindet, wobei das Symbol des gewählten Eintrags an der gleichen Stelle in der ersten und zweiten Bildschirmansicht angezeigt wird, ungeachtet dessen, ob das Symbol zusammen mit dem Menütitel angezeigt wird oder ohne das Menü angezeigt wird.

6. Das Verfahren nach Patentanspruch 5, wobei das Aufnehmen ein Aufnehmen der Benutzerbedienung durch eine Schaltfläche umfasst.

7. Das Verfahren nach Patentanspruch 5, das weiterhin den Schritt umfasst:
Steuern so dass das Menü, das durch die Benutzerberührung wählbar ist, nicht auf dem Berührungsbildschirm angezeigt wird, wenn der Berührungsbildschirm in dem nicht-aktivem Zustand ist.

8. Das Verfahren nach Patentanspruch 5, wobei das Menü Einträge und Symbole zum Darstellen der Funktionen der Einträge umfasst.

## Revendications

1. Dispositif multimédia comprenant :
un écran tactile (180, 320) destiné à recevoir le toucher d'un utilisateur,
une unité de manipulation (170) destinée à recevoir une manipulation de l'utilisateur, et
une unité de commande (160) destinée à effectuer un pilotage de telle sorte que l'écran tactile soit activé depuis un premier écran (401, 505) vers un deuxième écran (402, 502, 504), et un menu qui peut être sélectionné par un toucher de l'utilisateur est indiqué sur l'écran tactile lorsque la manipulation de l'utilisateur est entrée par l'intermédiaire de l'unité de manipulation alors que l'écran tactile se trouve à l'état inactif, dans lequel le premier écran illustre des icônes (410, 430) uniquement et le deuxième écran affiche les icônes (410, 430) en même temps que des titres (420, 440) de menus pouvant être sélectionnés, et, lorsqu'un élément est sélectionné à partir du menu affiché dans un troisième écran (503) après la sélection d'un titre de menu par l'intermédiaire de l'écran tactile, l'unité de commande effectue un pilotage de telle sorte qu'une icône (515) représentant l'élément sélectionné (530) reste affichée sur l'écran tactile même après que le menu a disparu en fonction d'une manipulation de l'utilisateur,
dans lequel l'icône de l'élément sélectionné est affichée dans le même endroit sur les premier et second écrans indépendamment de l'endroit où l'icône est affichée avec le titre du menu ou bien affichée sans le menu.

2. Dispositif multimédia selon la revendication 1, dans lequel l'unité de manipulation comprend un bouton (310).

3. Dispositif multimédia selon la revendication 1, dans lequel l'unité de commande effectue un pilotage de telle sorte que le menu qui peut être sélectionnée par le toucher de l'utilisateur n'est pas affiché sur l'écran tactile lorsque l'écran tactile se trouve à l'état inactivé.

4. Dispositif multimédia selon la revendication 1, dans lequel le menu comprend des éléments et des icônes permettant de représenter les fonctions des éléments.

5. Procédé destiné à procurer un menu dans un dispositif multimédia, le procédé comprenant :
recevoir le toucher d'un utilisateur par l'intermédiaire d'un écran tactile (180, 320),
effectuer un pilotage de telle sorte que l'écran tactile soit activé depuis un premier écran (401, 505) vers un deuxième écran (402, 502, 504), et un menu qui peut être sélectionné par un toucher de l'utilisateur est indiqué sur l'écran tactile lorsque la manipulation de l'utilisateur est entrée par l'intermédiaire d'une l'unité de manipulation (170) alors que l'écran tactile se trouve à l'état inactivé,
dans lequel le premier écran illustre des icônes (410, 430) uniquement et le deuxième écran affiche les icônes (410, 430) en même temps que des titres (420, 440) de menus pouvant être sélectionnés et lorsqu'un élément est sélectionné à partir du menu affiché sur un troisième écran (503) après la sélection d'un titre de menus par l'intermédiaire de l'écran tactile,
effectuer un pilotage de telle sorte qu'une icône (515) représentant l'élément sélectionné (530) reste affichée sur l'écran tactile même lorsque le menu a disparu en fonction d'une manipulation de l'utilisateur, dans lequel l'icône de l'élément sélectionné est affichée dans le même endroit sur les premier et second écrans indépendamment de l'endroit où l'icône est affichée avec les titres du menu ou bien affichée sans le menu.

6. Procédé selon la revendication 5, dans lequel la réception comprend la réception de la manipulation de l'utilisateur par l'intermédiaire d'un bouton.

7. Procédé selon la revendication 5, comprenant en outre :
effectuer un pilotage de telle sorte que le menu qui peut être sélectionné par le toucher de l'utilisateur ne soit pas affiché sur l'écran tactile lorsque l'écran tactile se trouve à l'état inactivé.

8. Procédé selon la revendication 5, dans lequel le menu comprend des éléments et des icônes permettant de représenter les fonctions des éléments.
